# NEUE EUROPÄISCHE PATENTSCHRIFT

(11) **EP 1 889 530 B2**
(45) Veröffentlichungstag und Bekanntmachung des Hinweises auf die Entscheidung über den Einspruch: **02.08.2017**
(45) Hinweis auf die Patenterteilung: 02.10.2013
(21) Anmeldenummer: 07015748.2
(22) Anmeldetag: 10.08.2007
(51) Int. Cl.: A01B 61/04, A01C 5/06

(54) **Zustreich- und/oder Andrückvorrichtung**
Smoothing and/or pressing device
Dispositif d'enduit et/ou de pression

(30) Priorität: 17.08.2006 DE 102006038724
(43) Veröffentlichungstag der Anmeldung: 20.02.2008
(73) Patentinhaber: Amazonen-Werke H. Dreyer GmbH & Co. KG, 49205 Hasbergen (DE)
(72) Erfinder: Steen, Rüdiger, 27798 Hude (DE); Brook, Gebhard, 49429 Visbek (DE); Goretzko, Robert, 28201 Bremen (DE)

(56) Entgegenhaltungen:
- EP-A- 0 350 657
- EP-A- 0 737 416
- EP-A1- 0 201 612
- EP-A1- 0 445 582
- WO-A-01/06831
- DE-T2- 69 605 466
- DE-U- 1 862 251
- US-A- 3 175 622
- US-A- 3 976 145
- US-A- 4 252 198
- Technik dlz-Dauertest "Drillen mit Tempo"

## Beschreibung

Die Erfindung betrifft eine Zustreich- und/oder Andrückvorrichtung.

Eine derartige Zustreich- und/oder Andrückvorrichtung ist beispielsweise durch die DE 696 05 466 T2 bekannt geworden.

Diese Vorrichtung ist über eine Haltevorrichtung am Rahmen angeordnet. Sie weist einen quer zur Fahrtrichtung verlaufenden Tragbalken auf, an welchem die Zustreich- und Andruckelemente angeordnet sind. Der Tragbalken ist über eine Gelenkvorrichtung an der Halterung befestigt. Die Gelenkachse der Gelenkvorrichtung verläuft quer zur Fahrtrichtung. Um diese Gelenkachse ist der Tragbalken mit den Zustreich- und Andrukkelementen verdrehbar und mittels eines Bolzens in unterschiedlichen Positionen einstellbar. Durch die Festlegung des Tragbalkens mit Zustreich- und Andruckelementen an der Halterung können die Zustreich- und Andruckelemente bei Rückwärtsfahrt der landwirtschaftlichen Maschine nicht entgegen der Fahrtrichtung verschwenken, so dass es zu Beschädigungen an der Zustreich- und Andrückvorrichtung kommt.

Der Erfindung liegt die Aufgabe zugrunde, eine Zustreich- und/oder Andrückeinrichtung in einfacher Weise vor Beschädigung bei Rückwärtsfahrt der Maschine zu schützen.

Diese Aufgabe wird erfindungsgemäß durch die Merkmale des Patentanspruches 1 gelöst. Infolge dieser Maßnahmen kann der Tragbalken mit den Zustreich- und Andrückelementen um die Gelenkachse in Fahrtrichtung verschwenken, so dass es zu keinen Beschädigungen an der Zustreich- und Andrückvorrichtung kommt. Hierdurch wird eine einfache Anordnung der Zustreich- und Andrückvorrichtung an der Haltevorrichtung in einfacher Weise erreicht. Das Verschwenken des Tragbalkens mit den Zustreich- und Andruckelementen bei Rückwärtsfahrt wird durch die sich oberhalb des Tragbalkens befindliche Gelenkachse der Gelenkvorrichtung erreicht.

In einfacher Weise wird dieses Verschwenken dadurch gewährleistet, dass der Halterung und/oder der Gelenkvorrichtung eine federnde Überlastsicherungseinheit ist, die den Tragbalken mit den Zustreichelementen in Arbeits- und/oder Zustreichstellung hält, zugeordnet ist.

Durch die federnde Überlastsicherungseinheit wird der Tragbalken in Arbeitsposition gehalten und kann aufgrund der federnden Überlastsicherung bei Rückwärtsfahren, wenn die Zustreichelemente oder Andrükkelemente den Boden berühren, entgegen der Fahrtrichtung verschwenken.

Um den Tragbalken mit den Zustreich- und Andruckelementen in der Höhe in einfacher Weise einstellen zu können, ist vorgesehen, dass das Hebelelement als Einstellspindel ausgebildet ist.

Eine Verstellmöglichkeit des Tragbalkens mit den Zustreich- und Andruckelementen in der Höhe lässt sich dadurch verwirklichen, dass das Hebelelement als teleskopartig aus- und einschiebbares Einstellelement ausgebildet ist.

In einfacher Weise wird das Hebelelement in der Arbeitsposition dadurch gehalten, dass das Hebelelement mittels einer Federklammer in Arbeits- und/oder Zustreichstellung erhalten wird.

Eine vorteilhafte Anordnung des Hebelelementes und eine vorteilhafte Höheneinrichtung des Tragbalkens mit den Zustreich- und Andrückelementen wird dadurch erreicht, dass das Hebelelement zumindest annähernd senkrecht verlaufend angeordnet ist.

Eine vorteilhafte Lage der Gelenkachse der Gelenkvorrichtung lässt sich dadurch erreichen, dass die Gelenkachse der Gelenkvorrichtung sich zumindest annähernd senkrecht oberhalb des Tragbalkens befindet.

Weitere Einzelheiten der Erfindung sind den übrigen Unteransprüchen, der Beispielsbeschreibung und den Zeichnungen zu entnehmen. Hierbei zeigen
- Fig. 1: die Zustreicheinrichtung in perspektivischer Darstellung,
- Fig. 2: die Zustreicheinrichtung in perspektivischer Darstellung, ausschnittsweise und in vergrößertem Maßstab,
- Fig. 3: die Zustreicheinrichtung in Seitenansicht,
- Fig. 4: eine weitere Zustreichvorrichtung nach der Darstellungsweise in Fig. 2,
- Fig. 5: die Zustreicheinrichtung in Seitenansicht, gemäß Fig. 4,
- Fig. 6: eine Andrückvorrichtung nach in der Darstellungsweise in Fig. 2 und
- Fig. 7: die Andrückvorrichtung gemäß Fig. 6 in Seitenansicht.

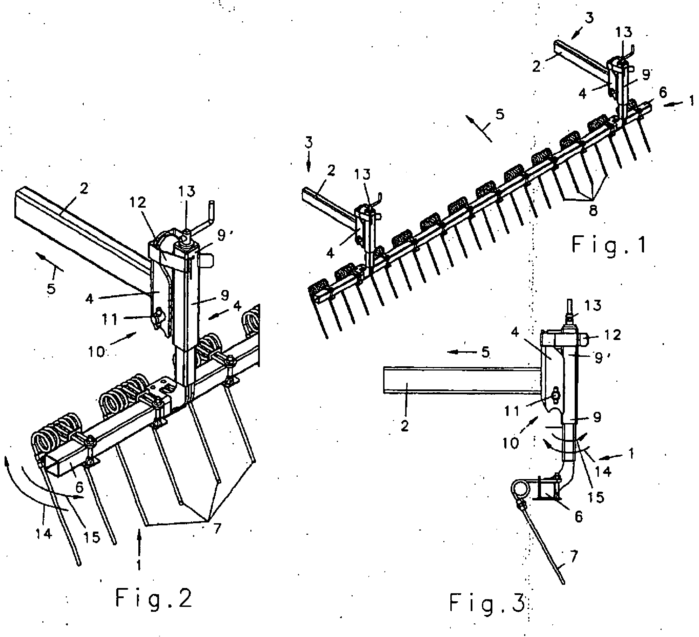

Die Zustreichvorrichtung 1 gemäß den Fig. 1 und 2 ist mittels der die beiden Tragarme 2 aufweisenden Haltevorrichtung 3 an dem Rahmen einer nicht dargestellten Bodenbearbeitungs- und/oder Verteilmaschine mit daran angeordneten Bodenbearbeitungswerkzeugen oder Säscharen anzuordnen. Die Zustreich- und Andrückvorrichtung 1 ist also hinter den Bodenbearbeitungswerkzeugen und Säscharen mittels der Haltevorrichtung 3 an dem Rahmen der Maschine angeordnet. Die Haltevorrichtung weist die Halterung 4 auf. An der Halterung 4 ist ein quer zur Fahrtrichtung 5 verlaufender Tragbalken 6 angeordnet. An dem Tragbalken 6 sind die Zustreichelemente 7 mittels Befestigungselementen 8 befestigt. Der Tragbalken 6 ist an Hebelelementen 9 der Halterung 4 befestigt. Das jeweilige Hebelelement 9 ist mittels einer Gelenkvorrichtung 10, deren Gelenkachse 11 quer zur Fahrtrichtung 5 verläuft, an der Halterung 4 angeordnet. Das Hebelelement 9 ragt nach oben über das Gelenk 10 hinaus. Der über das Gelenk 10 hinausragende Teil des Hebelelementes 9 bildet mit der Halterung 4 ein zusammenwirkendes Anschlagelement. An der Halterung 4 ist ein federndes Überlastsicherungselement, welches als Federklammer 12 ausgebildet ist und das Hebelelement 9 mit dem Tragbalken 6 und den Zustreichelementen 7 in Arbeitsstellung der Zustreichelemente 7 hält, angeordnet. Das Hebelelement 9 ist als teleskopartiges aus- und einschiebbares Einstellelement mit der Einstellspindel 13 ausgebildet, so dass der Tragbalken 6 mit den Zustreichelementen 7 in der Höhe gegenüber dem Rahmen der Maschine und der Halterung 4 verstellt werden kann.

Das Hebelelement 9 ist senkrecht verlaufend angeordnet. Die durch das Gelenk 11 verlaufende Gelenkachse der Gelenkvorrichtung 10 befindet sich oberhalb des Tragbalkens 6, und zwar zumindest annähernd senkrecht oberhalb des Tragbalkens 6.

Wenn die Maschine sich rückwärts bewegt und die unteren Enden der Zustreichelemente 7 Bodenberührung haben, schwenken die freien Enden der Zustreichelemente 7 mit dem Tragbalken 6 der Zustreichvorrichtung 1 gegenüber dem Rahmen um die Gelenkachse des Gelenkes 11 in Fahrtrichtung 5, wie durch den Pfeil 14 gekennzeichnet ist. Hierbei kommt das über das Gelenk 11 hinausragende Teil 9' des Hebels 9 aus der Federklammer 13 heraus. Bei dem nach vorn schwenken des Tragbalkens 6 mit den Zustreichelementen 7 federn die Zustreichelemente 7 etwas ein, so dass die Zustreichelemente 7 sich nicht in die Erde rammen wollen und aufstellen, sondern der Tragbalken 6 mit den Zustreichelementen 7 nach vorn verschwenken kann, ohne das es zu Beschädigung an der Zustreichvorrichtung 1 kommt.

Wenn die Maschine anschließend wieder vorwärts gefahren wird, schwenkt das Hebelelement 9 mit dem Tragbalken 6 und den Zustreichelementen 7 in Pfeilrichtung 15 wieder in Arbeitsstellung, wobei der obere Teil 9' des Hebelelementes 7 wieder in die Federklemmer 13 gedrückt wird und von dieser in Zustreichposition gehalten wird.

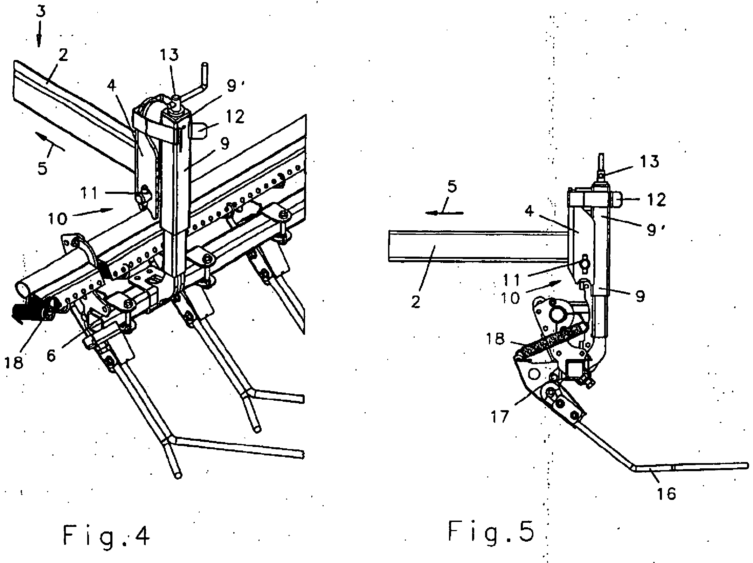

Das Ausführungsbeispiel gemäß Fig. 4 und 5 unterscheidet sich von dem Ausführungsbeispiel gemäß Fig. 1 und 2 dadurch, dass die Zustreichelemente anders ausgebildet sind. Die Zustreichelemente 16 sind an den Tragbalken 6 jeweils mit einer Gelenkvorrichtung 17 und einer Federvorrichtung 18 befestigt. Bei dem nach vorn schwenken des Tragbalkens 6 beim Rückwärtsfahren der Maschine federn die Zustreichelemente 16 um die Gelenkachse des Gelenkes 17 mit dem die Zustreichelemente 16 einzeln ein, weil sie jeweils einzeln an den Tragbalken 6 gefestigt sind, gegen die Kraft der zwischen dem Tragbalken 6 und den Zustreichelementen 16 angeordneten Feder 18 ein.

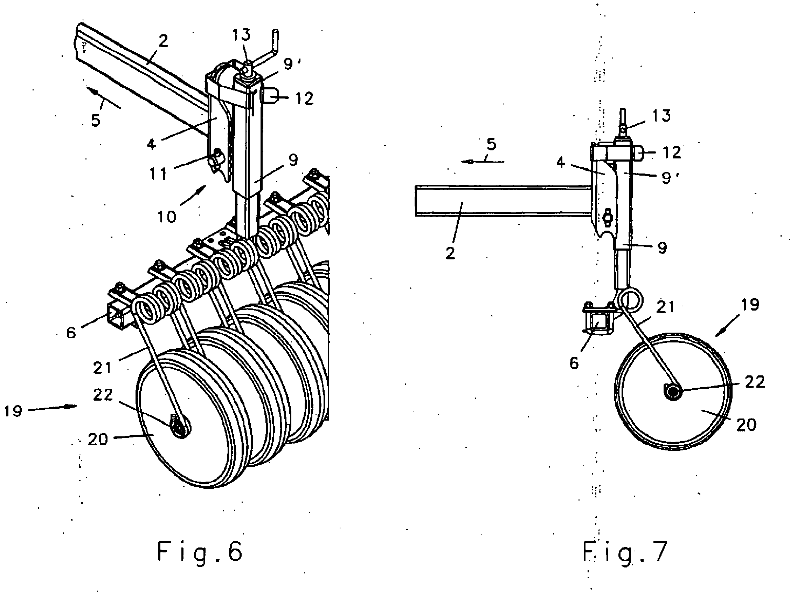

Die Fig. 6 und 7 zeigen eine Andrückvorrichtung 19, die sich von den Fig. 1-3 dadurch unterscheidet, dass an dem Tragbalken 6 anstelle von Zustreichelementen Andruckelemente 20 in Form von Andruckrollen, die mittels Federarme 21 an dem Tragbalken 6 angeordnet sind. Die Andruckrollen 20 sind mittels eines Drehlagers 22 an den Armen 21 frei drehbar aufgehängt. Die Funktionsweise beim Rückwärts- und Vorwärtsfahren entspricht den bei den Fig. 1-3 beschriebenen Zustreichvorrichtungen 7.

## Patentansprüche

1. Zustreich- und/oder Andrückvorrichtung für eine landwirtschaftliche Bodenbearbeitungs- und/oder Verteilmaschine mit einem Rahmen und daran angeordneten Bodenbearbeitungswerkzeugen und/oder Säscharen, wobei hinter dem Bodenbearbeitungswerkzeugen und/oder Säscharen die Zustreich- und/oder Andrückvorrichtung mittels einer Haltevorrichtung (3) am Rahmen angeordnet ist, wobei die Haltevorrichtung (3) am Rahmen befestigbare ist und eine Halterung (4) aufweist, wobei an der Halterung (4) zumindest ein quer zur Fahrtrichtung verlaufender Tragbalken (6), an dem die Zustreich- und/oder Andruckelemente (1) angeordnet sind, mittels mindestens jeweils einer Gelenkvorrichtung (10), deren Gelenkachse (11) quer zur Fahrtrichtung verläuft und jeweils einem am Tragbalken (6) befestigten Hebelelement (9), das an dem Gelenk (11) der Gelenkvorrichtung (10) befestigt ist, um die Gelenkachse verdrehbar befestigt ist, wobei die Gelenkachse (11) der Gelenkvorrichtung (10) sich oberhalb des Tragbalkens (6) befindet und die Gelenkvorrichtung (10) derart ausgebildet ist, dass der Tragbalken (6) mit den Zustreich- (7, 16) und/oder Andrückelementen (20) bei Rückwärtsfahrt der Maschine derart um die Gelenkachse verschwenkt, dass die freien Enden der Zustreich- (7, 16) und/oder Andruckelemente (20) gegenüber dem Rahmen in Fahrtrichtung (15) nach vorne und unten verschwenken, wobei das Hebelelement (9) über das Gelenk (10, 11) nach oben hinausragt, und der über das Gelenk (10, 11) hinausragende Teil (9') des Hebelelementes (9) ein in Arbeitsstellung mit der Halterung (4) zusammenwirkendes Anschlagelement bildet, dass der Halterung (4) und/oder der Gelenkvorrichtung (10) eine federnde Überlastsicherungseinheit (12) ist, die den Tragbalken (6) mit den Zustreich- (7, 16) und/oder Andrückelementen (20) in Arbeits- und/oder Zustreichstellung hält, zugeordnet ist, und dass das Hebelelement (9) mittels einer Federklammer (12) in Arbeits- und/oder Zustreichstellung erhalten wird.

2. Zustreich- und/oder Andruckvorrichtung nach Anspruch 1, **dadurch gekennzeichnet, dass** das Hebelelement (9) als Einstellspindel (12) ausgebildet ist.

3. Zustreich- und/oder Andruckvorrichtung nach Anspruch 1, **dadurch gekennzeichnet, dass** das Hebelelement (9) als teleskopartig aus- und einschiebbares Einstellelement ausgebildet ist.

4. Zustreich- und/oder Andruckvorrichtung nach einem oder mehreren der vorstehenden Ansprüche, **dadurch gekennzeichnet, dass** das Hebelelement (9) zumindest annähernd senkrecht verlaufend angeordnet ist.

5. Zustreich- und/oder Andruckvorrichtung nach Anspruch 1, **dadurch gekennzeichnet, dass** die Gelenkachse (11) der Gelenkvorrichtung (10) sich zumindest annähernd senkrecht oberhalb des Tragbalkens (6) befindet.

## Claims

1. Smoothing and/or pressing apparatus for an agricultural soil working and/or distributing machine having a frame and sowing shares and/or soil working implements which are arranged on the said frame, the smoothing and/or pressing apparatus being arranged on the frame behind the soil working implements and/or sowing shares by means of a holding apparatus (3), it being possible for the holding apparatus (3) to be fastened to the frame, and the holding apparatus (3) having a holder (4), at least one load-bearing beam (6) which runs transversely with respect to the driving direction and on which the smoothing and/or pressing elements (1) are arranged being fastened to the holder (4) by means of at least in each case one articulation apparatus (10), the articulation axis (11) of which runs transversely with respect to the driving direction, and by means of in each case one lever element (9) which is fastened to the load-bearing beam (6) and is fastened to the articulation (11) of the articulation apparatus (10), such that the said at least one load-bearing beam (6) can be rotated about the articulation axis, the articulation axis (11) of the articulation apparatus (10) being situated above the load-bearing beam (6) and the articulation apparatus (10) being configured in such a way that, during reverse driving of the machine, the load-bearing beam (6) with the smoothing (7, 16) and/or pressing elements (20) pivots about the articulation axis in such a way that the free ends of the smoothing (7, 16) and/or pressing elements (20) pivot to the front and bottom in the driving direction (15) with respect to the frame, the lever element (9) protruding upwards beyond the articulation (10, 11), and that part (9') of the lever element (9) which protrudes beyond the articulation (10, 11) forming a stop element which interacts with the holder (4) in the working position, that the holder (4) and/or the articulation apparatus (10) are/is a sprung overload safeguard unit (12) which holds the load-bearing beam (6) with the smoothing (7, 16) and/or pressing elements (20) in the working and/or smoothing position, is assigned, and that the lever element (9) is held in the working and/or smoothing position by means of a spring clamp (12).

2. Smoothing and/or pressing apparatus according to Claim 1, **characterized in that** the lever element (9) is configured as a setting spindle (12).

3. Smoothing and/or pressing apparatus according to Claim 1, **characterized in that** the lever element (9) is configured as a setting element which can be extended and retracted telescopically.

4. Smoothing and/or pressing apparatus according to one or more of the preceding claims, **characterized in that** the lever element (9) is arranged so as to run at least approximately perpendicularly.

5. Smoothing and/or pressing apparatus according to Claim 1, **characterized in that** the articulation axis (11) of the articulation apparatus (10) is situated at least approximately perpendicularly above the load-bearing beam (6).

## Revendications

1. Dispositif de recouvrement et/ou de rappuyage pour une machine agricole de travail du sol et/ou distributrice comprenant un cadre et des outils de travail du sol et/ou des socs de semoir disposés sur celui-ci, le dispositif de recouvrement et/ou de rappuyage étant disposé sur le cadre, au moyen d'un dispositif de retenue (3), derrière les outils de travail du sol et/ou les socs de semoir, le dispositif de retenue (3) pouvant être fixé au cadre et comprenant un élément de retenue (4), au moins un barre de support (6) s'étendant transversalement par rapport à la direction de marche et sur laquelle sont disposés les éléments de recouvrement et/ou de rappuyage (1) étant fixée sur l'élément de retenue (4) de manière à pouvoir tourner autour de l'axe d'articulation au moyen d'au moins un dispositif d'articulation (10) respectif dont l'axe d'articulation (11) s'étend transversalement par rapport à la direction de marche et au moyen d'un élément de levier (9) respectif fixé à la barre de support (6), lequel est fixé à l'articulation (11) du dispositif d'articulation (10), l'axe d'articulation (11) du dispositif d'articulation (10) se trouvant au-dessus de la barre de support (6) et le dispositif d'articulation (10) étant réalisé de telle sorte que la barre de support (6) pourvue des éléments de recouvrement (7, 16) et/ou de rappuyage (20) soit pivotée autour de l'axe d'articulation lors du déplacement en marche arrière de la machine de telle sorte que les extrémités libres des éléments de recouvrement (7, 16) et/ou de rappuyage (20) pivotent vers l'avant et vers le bas dans la direction de conduite (15) par rapport au cadre, l'élément de levier (9) faisant saillie vers le haut au-delà de l'articulation (10, 11) et la partie (9') de l'élément de levier (9) faisant saillie au-delà de l'articulation (10, 11) formant un élément de butée coopérant avec l'élément de retenue (4) dans la position de travail, en ce qu'une unité élastique de protection contre les surcharges (12) est à l'élément de retenue (4) et/ou au dispositif d'articulation (10), laquelle unité de protection contre les surcharges maintient la barre de support (6) pourvue des éléments de recouvrement (7, 16) et/ou de rappuyage (20) dans la position de travail et/ou de recouvrement, est associée, et en ce que l'élément de levier (9) est maintenu dans la position de travail et/ou de recouvrement au moyen d'une pince élastique (12).

2. Dispositif de recouvrement et/ou de rappuyage selon la revendication 1, **caractérisé en ce que** l'élément de levier (9) est réalisé sous forme de tige de réglage (12).

3. Dispositif de recouvrement et/ou de rappuyage selon la revendication 1, **caractérisé en ce que** l'élément de levier (9) est réalisé sous forme d'élément de réglage qui peut être rentré et sorti de manière télescopique.

4. Dispositif de recouvrement et/ou de rappuyage selon l'une quelconque ou plusieurs des revendications précédentes, **caractérisé en ce que** l'élément de levier (9) est disposé de manière à s'étendre au moins approximativement verticalement.

5. Dispositif de recouvrement et/ou de rappuyage selon la revendication 1, **caractérisé en ce que** l'axe d'articulation (11) du dispositif d'articulation (10) se trouve au moins approximativement verticalement au-dessus de la barre de support (6).
